# EUROPÄISCHE PATENTSCHRIFT

(11) **EP 1 224 108 B1**
(45) Veröffentlichungstag und Bekanntmachung des Hinweises auf die Patenterteilung: **22.02.2006**
(21) Anmeldenummer: 01957625.5
(22) Anmeldetag: 22.08.2001
(51) Int. Cl.: B61B 7/02, A01G 23/00

(54) **VERFAHRBARE MASCHINEN MIT ARBEITSGERÄTEN AUF DEM MASCHINENCHASSIS UND BODENABSTÜTZUNGEN**
TRAVELLING MACHINES COMPRISING WORKING DEVICES ON THE MACHINE CHASSIS AND FLOOR SUPPORTS
MACHINES MOBILES COMPRENANT DES OUTILS DISPOSES SUR LE CHASSIS DE MACHINE ET DES ELEMENTS D'APPUI SUR LE SOL

(30) Priorität: 23.08.2000 AT 14492000; 12.12.2000 AT 20642000
(43) Veröffentlichungstag der Anmeldung: 24.07.2002
(73) Patentinhaber: Prinz, Herbert, 8623 Alenz-Kurort (AT)
(72) Erfinder: Prinz, Herbert, 8623 Alenz-Kurort (AT)
(74) Vertreter: Ellmeyer, Wolfgang
(86) Internationale Anmeldenummer: PCT/AT2001/000273
(87) Internationale Veröffentlichungsnummer: WO 2002/016182

(56) Entgegenhaltungen:
- GB-A- 2 249 291
- US-A- 3 083 839
- US-A- 3 850 304
- US-A- 5 086 684

## Beschreibung

Die Erfindung betrifft eine Kombination aus einem Seilkran und einer verfahrbaren Maschine mit Arbeitsgeräten auf einem Maschinenchassis und Bodenabstützungen, wobei die verfahrbare Maschine entlang eines Tragseils des Seilkrans verfahrbar ist.

Verfahrbare Maschinen mit Arbeitsgeräten auf dem Maschinenchassis und Bodenabstützungen, auch Auslegerabstützungen, zum Arbeiten auf befestigtem Boden und im Gelände, sind als Rad- und Raupenfahrzeuge gängig, auf deren Chassis schwenkbare Arbeitsgeräte wie beispielsweise Bohrgeräte, Rammen, Bagger, Kräne und Greifer angeordnet sind. Auf dem Gebiet der Forstwirtschaft sind als derartige Arbeitsgeräte neben Kränen und Greifern auch Fällköpfe und Harvesterköpfe bekannt, wobei die Harvesterköpfe zum automatischen Fällen, Entasten und Ablängen von Bäumen dienen.

Aus der US 3 850 304 A geht eine Vorrichtung zum Blochziehen mittels eines am Boden stehenden Radfahrzeugs hervor, das mit Hilfe eines Freigabe- und Rückholseils entlang eines Überkopfseils bewegt wird. Beim Ausfahren des Freigabe- und Rückholseils rollt das Radfahrzeug in die niedrigst mögliche Lage, beim Einziehen desselben wird das Radfahrzeug wieder bergan gezogen. Das Radfahrzeug weist eine Winde zum Heranholen von Blochen über ein Seil und eine Erdbewegungsschaufel auf.

Insbesondere Steillagen und nicht tragfähige Böden setzen diesen Maschinen natürliche Grenzen und überall dort, wo keine Erdbewegungen stattfinden oder stattfinden sollen, verursachen alle diese Maschinen immense Boden- und Bestandesschäden - in nichttragfähigen Böden können sie bis zur Arbeitsunfähigkeit einsinken und müssen geborgen werden.

Die Erfindung zielt darauf ab, derartige Maschinen mit einem Seilkran zu kombinieren, sodaß die Maschinen entlang von dessen Tragseil in der Luft verfahrbar sind und nur zum Arbeiten zum Boden abgesenkt und dort abgestützt werden. Die Verwendung eines Seilkrans ergibt natürlich auch die Möglichkeit, zu verlegendes bzw. zu versetzendes Material, wie z.B. Rohre oder Stahlträger, über das Tragseil zum Einsatzort zu bringen oder abzuförderndes Material, z.B. Holz, vom Lager- oder Schnittort wegzubringen.

Erfindungsgemäß ist eine eingangs genannte Kombination somit dadurch gekennzeichnet, daß ein auf dem Tragseil des Seilkrans verfahr- und festklemmbarer Laufwagen vorgesehen ist, wobei zur Erzielung der Verfahrbarkeit der Maschine das Maschinenchassis mit zumindest einem Aufhängeelement zur Anlenkung des Maschinenchassis an dem verfahr- und festklemmbaren Laufwagen und zu dessen Abhängung vom Tragseil versehen ist, sodaß die mit Arbeitsgeräten bestückte verfahrbare Maschine entlang des Tragseils ohne Bodenkontakt verfahrbar ist und für den Einsatz der Arbeitsgeräte das Maschinenchassis über das Aufhängeelement zum Boden absenkbar und dort abstützbar ist.

Eine Ausführungsform der Erfindung kann darin bestehen, das verstellbare Aufhängeelement durch eine Teleskopsäule auszubilden.

Bevorzugt kann das Maschinenchassis einen Rahmen umfassen und kann auch eine Plattform bilden oder tragen.

Zum Arbeiten in Steillagen ist fast immer wesentlich, daß das Chassis in Horizontalausrichtung abgestützt wird - zu diesem Zweck können am Maschinenchassis oder am Rahmen zumindest drei gegenüber dem Chassis bzw. Rahmen in zumindest einer Ebene schwenkbare Bodenstützstreben vorgesehen sein. Diese Bodenstützstreben dienen vor allem zur Erzielung der Unverdrehbarkeit des Chassis in Arbeitsstellung und sind daher individuell betätigbar, und können insbesondere über deren Länge knickbar und vorzugsweise teleskopisch ausgeführt sein.

Als weitere Möglichkeit der Feinausrichtung des Chassis bzw. des Rahmen kann in weiterer Ausbildung der Erfindung dessen Verschwenkbarkeit gegenüber dem Aufhängeelement - und somit auch gegenüber dem Tragseil - vorgesehen sein.

Wie bereits ausgeführt, sind unter der Definition Arbeitsgeräte alle solchen zu zählen, mit denen am oder im Boden gearbeitet werden kann, auf den das Chassis abgesenkt wird - als Beispiele für Arbeitsgeräte im Felsgelände sind neben Rammen und Bohrern daher auch Steinfräsen und Steinsägen zu erwähnen, die in der Kulturtechnik vor allem dort eingesetzt werden, wo die Festigkeit des Untergrunds erhalten bleiben muß, z.B. wo Lawinenschutzkonstruktionen zu verankern sind.

Es können die Arbeitsgeräte über einen schwenkbaren Ausleger mit dem Chassis oder dem Rahmen verbunden sein.

Vorteilhaft können am Ausleger ausfahrbare Bodenabstützungen vorgesehen sein.

Weiterhin kann bevorzugt sein, daß der Seilkran mit einem gegenüber dem ersten Laufwagen am Tragseil verfahrbaren zweiten Laufwagen versehen ist, von dem ein Aufnahmekorb abgehängt ist.

Eine weitere Ausführungsform der Erfindung liegt vor in Form eines Geräts zum Fällen, Entasten und Ablängen von Bäumen in Steillagen oder auf nicht tragfähigen Böden mit einem Harvesterkopf als Arbeitsgerät, der über einen Ausleger mit einer Teleskopsäule verbunden ist, die von einem am Tragseil des Seilkrans verfahr- und festklemmbaren Laufwagen abgehängt ist und im Bereich ihres anderen Endes einen Rahmen trägt, an dem zumindest drei gegenüber dem Rahmen in zumindest einer Ebene schwenkbare Bodenstützstreben vorgesehen sind.

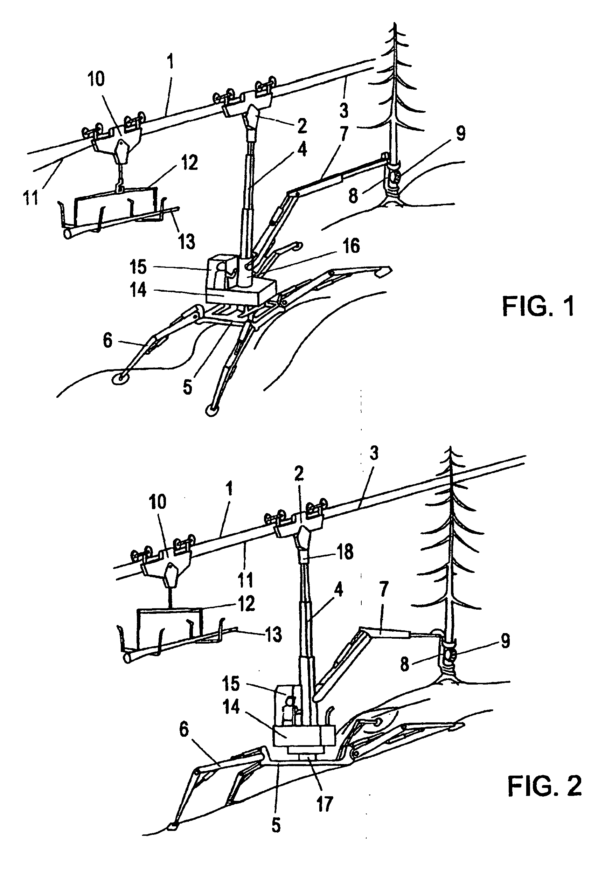

Im folgenden wird die Erfindung unter Bezug auf die Zeichnung anhand von Beispielen näher beschrieben, wobei als eigentliches Arbeitsgerät der erfindungsgemäßen Maschinen ein Harvesterkopf dargestell ist und die Fig. 1 und 2 schaubildliche schematische Darstellungen erfindungsgemäßer Geräte bei der Arbeit nach dem Erfassen eines Baums durch den Harvesterkopf vor dem Fällschnitt sind.

Am Tragseil 1 eines Seilkrans läuft ein klemmbarer Laufwagen 2 mit einem Zugseil 3 und vom Laufwagen ist eine Teleskopsäule 4 abgehängt, die an ihrem anderen Ende einen Rahmen 5 trägt, der sich über 4 hydraulisch betätigte Stützstreben 6 am Boden abstützt. Das Arbeitswerkzeug ist ein am Ende eines Kranauslegers 7 angeordneter Harvesterkopf 8, wobei eine seiner beiden Klemmrollen 9 deutlich zu erkennen ist. Weiterhin erkennt man einen zweiten Laufwagen 10 mit eigenem Zugseil 11 samt abgehängtem Stämmekorb 12 zum Abtransport der geharvesteten Stämme 13. Der Harvesterkopf ist ein bekannter Rollenharvesterkopf mit zwei vorschiebenden Klemmrollen, 2 Messerpaaren und einer Fällkettensäge am Ende samt integrierter Längen- und Dickenmessung oder ein Schubharvesterkopf.

Bei der Ausführungsform nach Fig. 1 ist der Rahmen 5 fest mit der Teleskopsäule 4 verbunden, die gegenüber dem Laufwagen 2 nur kippbar, aber nicht verdrehbar ist, sodaß auch der Rahmen 5 gegenüber dem Tragseil 1 immer gleich steht. Der Kranausleger 7 ist über ein Führungsrohr 16 an einer Plattform 14 angelenkt, die samt der Arbeitskabine 15 und den Antriebsaggregaten hydraulisch um die Teleskopsäule 4 - somit auch gegenüber dem Rahmen 5 - schwenkbar ist.

Fig. 2 zeigt eine Ausführungsform, bei der die Teleskopsäule 4 über ein Getriebe 17 schwenkbar mit dem Rahmen 5 verbunden ist und gegenüber dem Zugwagen 2 eine festklemmbare Drehlagerung 18 aufweist. Wie gemäß Fig. 1 ist der Kranausleger 7 gegenüber der Plattform 14 und der Arbeitskabine nicht horizontal verschwenkbar.

Zur Justierung des Rahmens 5 gegenüber dem Tragseil 1 wird dieser in der Luft bei festgeklemmter Drehlagerung 18 gegenüber der Teleskopsäule 4 verdreht, abgesenkt und mittels der Stützstreben 6 am Boden fixiert. Dann wird die Klemmung der Drehlagerung 18 aufgehoben, sodaß über das Getriebe 17 dann die Einheit aus Teleskopsäule 4, Plattform 14, Arbeitskabine 15, Kranausleger 7 und Harvesterkopf 8 gegenüber dem Tragseil 2 und dem Rahmen 5 horizontal verschwenkbar ist.

Auftretende Kippmomente des erfindungsgemäßen Gerätes am jeweiligen Arbeitsort können über die Stützstreben 6 und die Teleskopsäule 4 durch Beladen des Stämmeaufnahmekorbes am zweiten Laufwagen ausgeglichen werden. Das erfindungsgemäße Gerät ermöglicht eine Holzernte im Winter. In dieser Zeit entstehen die geringsten Bestandesschäden und es besteht die günstigste Holzqualität.

Wie bei Maschinen gemäß dem Stand der Technik dient auch bei den erfindungsgemäßen Maschinen das Chassis als Träger für den Energielieferanten, in aller Regel eine Verbrennungskraftmaschine, die einen Elektrogenerator, Pumpen wie Kompressoren oder Hydraulikmotoren, und/oder mechanische Antriebe oder dgl. in Abhängigkeit von deren Funktion anspeist. Der wesentliche Unterschied ergibt sich dadurch, daß die Verfahrbarkeit der erfindungsgemäßen Maschinen über deren Abhängung vom Tragseil eines Seilkrans gegeben ist, die Überwindung von Bodenhindernissen also in der Luft erfolgt und ebenso der Zu- und Abtransport von zum Arbeiten nötigen und beim Arbeiten anfallendem Material zur und von der Maschine. Hiezu wird am Tragseil des Seilkrans mindestens ein (bergan und/oder bergab des ersten Laufwagens) zweiter Laufwagen über jeweils ein - vorzugsweise eigenes - Zugseil verfahren und von diesem(n) Laufwagen Transportbehälter abgehängt.

In der Zeichnung sind Maschinen mit Steuerkabine dargestellt - es ist jedoch auch daran gedacht, Maschinen mit Funkfernbedienung vorzusehen, sodaß beim Arbeiten sich keine Bedienungsperson an Bord der Maschine befindet.

## Patentansprüche

1. Kombination aus einem Seilkran und einer verfahrbaren Maschine mit Arbeitsgeräten auf einem Maschinenchassis und Bodenabstützungen, wobei die verfahrbare Maschine entlang eines Tragseils (1) des Seilkrans verfahrbar ist, **dadurch gekennzeichnet, daß** ein auf dem Tragseil (1) des Seilkrans verfahr- und festklemmbarer Laufwagen (2) vorgesehen ist, wobei zur Erzielung der Verfahrbarkeit der Maschine das Maschinenchassis mit zumindest einem Aufhängeelement zur Anlenkung des Maschinenchassis an dem verfahr- und festklemmbaren Laufwagen (2) und zu dessen Abhängung vom Tragseil (1) versehen ist, sodaß die mit Arbeitsgeräten bestückte verfahrbare Maschine entlang des Tragseils (1) ohne Bodenkontakt verfahrbar ist und für den Einsatz der Arbeitsgeräte das Maschinenchassis über das Aufhängeelement zum Boden absenkbar und dort abstützbar ist.

2. Kombination nach Anspruch 1, **dadurch gekennzeichnet, daß** das Aufhängeelement durch eine Teleskopsäule (4) gebildet ist.

3. Kombination nach Anspruch 1 oder 2, **dadurch gekennzeichnet, daß** das Maschinenchassis einen Rahmen (5) umfaßt.

4. Kombination nach Anspruch 1, 2 oder 3, **dadurch gekennzeichnet, daß** am Maschinenchassis zumindest drei gegenüber dem Maschinenchassis in zumindest einer Ebene schwenkbare Bodenstützstreben (6) vorgesehen sind.

5. Kombination nach Anspruch 4, **dadurch gekennzeichnet, daß** die Bodenstützstreben (6) über deren Länge knickbar und vorzugsweise teleskopisch ausgeführt sind.

6. Kombination nach einem der Ansprüche 1 bis 5, **dadurch gekennzeichnet, daß** das Maschinenchassis gegenüber dem Aufhängeelement, insbesondere der Teleskopsäule (4), verschwenkbar vorgesehen ist.

7. Kombination nach einem der Ansprüche 1 bis 6, **dadurch gekennzeichnet, daß** die Arbeitsgeräte über einen schwenkbaren Ausleger (7) mit dem Maschinenchassis verbunden sind.

8. Kombination nach Anspruch 7, **dadurch gekennzeichnet, daß** am Ausleger (7) ausfahrbare Bodenabstützungen vorgesehen sind.

9. Kombination nach einem der Ansprüche 1 bis 8, **dadurch gekennzeichnet, daß** der Seilkran mit einem gegenüber dem ersten Laufwagen (2) am Tragseil (1) verfahrbaren zweiten Laufwagen (10) versehen ist, von dem ein Aufnahmekorb (12) abgehängt ist.

10. Kombination nach einem der Ansprüche 2 bis 9, wobei die Verfahrbare Maschine in Form eines Geräts zum Fällen, Entasten und Ablängen von Bäumen in Steillagen oder auf nicht tragfähigen Böden mit einem Harvesterkopf (8) als Arbeitsgerät, der über einen Ausleger (7) mit der Teleskopsäule (4) verbunden ist, die von dem am Tragseil (1) des Seilkrans verfahr- und festklemmbaren Laufwagen (2) abgehängt ist und im Bereich ihres anderen Endes einen Rahmen (5) trägt, an dem zumindest drei gegenüber dem Rahmen (5) in zumindest einer Ebene schwenkbare Bodenstützstreben (6) vorgesehen sind.

## Claims

1. Combination of a cable crane and a moveable machine having tools on a machine chassis and outrigger ground supports, said moveable machine being moveable along a track rope (1) of the cable crane, **characterised in that** there is provided a trolley (2) which is moveable and lockable on said cable crane track rope (1), the machine chassis having at least one suspension element for articulating said machine chassis to said moveable and lockable trolley (2) and for suspending it from said track rope (1), in order to achieve moveability of said machine, so that the moveable machine equipped with tools is moveable along said track rope without touching ground and that said machine chassis is lowerable to the ground and supportable thereon in order to use the tools.

2. Combination according to claim 1, **characterised in that** said suspension element consists in a telescopic pillar (4).

3. Combination according to claim 1 or 2, **characterised in that** said machine chassis comprises a frame (5).

4. Combination according to claim 1, 2 or 3, **characterised in that** at least three outrigger ground support struts (6) are provided on the machine chassis which are pivotable in at least one plane relative to the machine chassis.

5. Combination according to claim 4, **characterised in that** said outrigger ground support struts (6) are bendable along their length and preferably constructed telescopically.

6. Combination according to any one of claims 1 to 5, **characterised in that** said machine chassis is provided pivotably relative to said suspension element, in particular relative to said telescopic pillar (4).

7. Combination according to any one of claims 1 to 6, **characterised in that** said tools are connected to said machine chassis via a pivotable extension arm (7).

8. Combination according to claim 7, **characterised in that** extendable outrigger ground supports are provided on said extension arm (7).

9. Combination according to any one of claims 1 to 8, **characterised in that** the cable crane is provided with a second trolley (10) moveable on said cable crane track rope (1) relative to said first trolley (2) and having a receiving cage (12) suspended from it.

10. Combination according to any one of claims 2 to 9, the moveable machine, in form of a device for felling, delimbing and bucking trees on steep sites or unstable soils, having a harvester head (8) as a tool that is connected, via an extension arm (7), to the telescopic pillar (4) which is suspended from said trolley (2) moveable and lockable on said cable crane track rope (1) and which carries a frame (5) in the region of its other end, at which at least three outrigger ground support struts (6) are provided being pivotable in at least one plane relative to said frame (5).

## Revendications

1. Combinaison entre une grue à câble et un engin déplaçable avec des outils sur un châssis d'engin et des éléments d'appui sur sol, l'engin déplaçable étant déplaçable le long d'un câble porteur (1) de la grue à câble, **caractérisée en ce qu'**un chariot roulant (2), déplaçable et serrable sur le câble porteur (1) est prévu, le châssis d'engin étant muni d'au moins un élément de suspension pour articuler le châssis d'engin avec le chariot roulant (2) déplaçable et serrable et pour le suspendre au câble porteur (1) afin d'obtenir la capacité au déplacement de l'engin déplaçable, de sorte que l'engin déplaçable muni d'outils est déplaçable le long du câble porteur (1) sans contact au sol et que le châssis d'engin, par l'élément de suspension, est abaissable au sol et appuyable sur celui-ci afin d'utiliser les outils.

2. Combinaison selon la revendication 1, **caractérisée en ce que** l'élément de suspension est formée par une colonne télescopique (4).

3. Combinaison selon la revendication 1 ou 2, **caractérisée en ce que** le châssis d'engin comprend un cadre (5).

4. Combinaison selon la revendication 1, 2 ou 3, **caractérisée en ce qu'**au moins trois étais d'appui sur sol (6) sont prévus au châssis d'engin qui sont pivotables dans au moins un plan relatif au châssis d'engin.

5. Combinaison selon la revendication 4, **caractérisée en ce que** les étais d'appui sur sol (6) sont pliables le long de leur longueur et construits de façon télescopique.

6. Combinaison selon l'une quelconque des revendications 1 à 5, **caractérisée en ce que** le châssis d'engin est prévu de façon pivotable relatif à l'élément de suspension, en particulier relatif à la colonne télescopique.

7. Combinaison selon l'une quelconque des revendications 1 à 6, **caractérisée en ce que** les outils sont connectés avec le châssis d'engin par un avant-bras (7) pivotable.

8. Combinaison selon la revendication 7, **caractérisée en ce que** des éléments d'appui sur sol extensibles sont prévus à l'avant-bras (7).

9. Combinaison selon l'une quelconque des revendications 1 à 8, **caractérisée en ce que** la grue à câble est munie d'un deuxième chariot roulant (10) qui est déplaçable sur le câble porteur (1) relatif au premier chariot roulant (2) et auquel il y a suspendu une cage de réception (12).

10. Combinaison selon l'une quelconque des revendications 2 à 9, l'engin déplaçable sous forme d'un instrument pour abattre, ébrancher et tronçonner des arbres sur des sites à forte pente ou des terrains instables étant muni d'une tête de bûcheronnage (8) comme outil qui est connecté, par un avant-bras (7), à la colonne télescopique (4) étant suspendue au chariot roulant (2) déplaçable et serrable sur le câble porteur (1) de la grue à câble et portant un cadre (5) dans la région de son autre extrémité auquel il y prévu au moins trois étais d'appui sur sol (6) pivotables dans au moins un plan relatif au cadre (5).
